# EUROPÄISCHE PATENTSCHRIFT

(11) **EP 3 453 517 B1**
(45) Veröffentlichungstag und Bekanntmachung des Hinweises auf die Patenterteilung: **10.03.2021**
(21) Anmeldenummer: 18193656.8
(22) Anmeldetag: 11.09.2018
(51) Int. Cl.: B29C 51/04, B29C 51/34, B29C 51/26, B29C 51/42, B29L 31/00

(54) **FORMSTATION MIT IM FORMSTEMPEL INTEGRIERTEM EINDRÜCKER UND VERFAHREN**
FORMING STATION WITH INTEGRATED DEPRESSION DEVICE IN FORMING DIE AND METHOD
STATION DE FORMAGE POURVUE D'ÉLÉMENT D'ENFONCEMENT INTÉGRÉ DANS LE POINÇON DE FORMAGE ET PROCÉDÉ

(30) Priorität: 11.09.2017 DE 102017215968
(43) Veröffentlichungstag der Anmeldung: 13.03.2019
(73) Patentinhaber: MULTIVAC Sepp Haggenmüller SE & Co. KG, 87787 Wolfertschwenden (DE)
(72) Erfinder: LAUTH, Frank, 87787 Wolfertschwenden/Niederdorf (DE); WILHELM, Roland, 87730 Bad Grönenbach (DE)
(74) Vertreter: Grünecker Patent- und Rechtsanwälte PartG mbB

(56) Entgegenhaltungen:
- CA-A- 1 135 020
- JP-U- S61 105 126
- US-A- 3 123 863
- US-A- 3 484 900
- US-A- 4 338 070
- US-A- 5 573 789
- US-B1- 6 440 354

## Beschreibung

Die Erfindung betrifft das Gebiet des Herstellens von Verpackungsmulden durch Tiefziehen einer Folienbahn.

Es ist beispielsweise aus der EP 1 514 668 A1 ein Formwerkzeug zum Tiefziehen von Behältern aus thermoplastischem Kunststoff bekannt. Eine erwärmte Folienbahn wird zwischen ein Werkzeugoberteil und ein Werkzeugunterteil mit einem Formnest eintransportiert. Anschließend wird ein Streckhelfer des Werkzeugoberteils entlang einer vertikalen Richtung nach unten in das Formnest des Werkzeugunterteils eingefahren, wobei die zwischen dem Werkzeugunterteil und dem Werkzeugoberteil liegende Folienbahn mitgenommen wird. Bereits während des Einfahrens des Streckhelfers in das Formnest wird Druckluft aus seitlich in dem Streckhelfer vorgesehenen Öffnungen geblasen, um die Folie an eine Innenwand des Formnests anzudrücken. Somit wird ein der Form der Innenwand des Formnests entsprechender Behälter tiefgezogen. Nach einem Auskühlen wird der Behälter ausgestanzt und bei geöffnetem Formwerkzeug ausgeworfen oder wird mit dem Rest der Folienbahn verbunden Folgeeinrichtungen zugeführt. Nachteilig bei einem solchen System ist, dass die Formgebung der tiefziehbaren Behälter beschränkt ist. Insbesondere das Vorsehen von Vertiefungen in Seitenwänden des Behälters ist nur in begrenztem Maße möglich. Speziell beim Tiefziehen von Folien mit großen Dicken von beispielsweise 700 µm oder mehr wäre ein Anlegen der Folie an eine Innenwand des Formnests im Bereich von seitlichen Vertiefungen in der Innenwand oft nur von unzureichender Qualität.

Es ist aus der Praxis bekannt, in eine Kunststoffverpackungsmulde Vertiefungen und Kerben als Wiederverschlusselemente für einen haltenden Eingriff mit einem Verpackungsdeckel nach dem Tiefziehen in einem separaten Bearbeitungsschritt einzudrücken. Neben der Notwendigkeit eines zusätzlichen Bearbeitungsschritts ist hierbei auch nachteilig, dass insbesondere bei dickeren Hartfolien beim Verformen der kalten Folie nach dem Tiefziehen sogenannter "Weißbruch" entsteht, was aus ästhetischen Gründen unerwünscht sein kann und zudem die Stabilität der Verpackung beeinträchtigen kann.

Aus der WO 2007/006551 A1 ist es bekannt, eine Verpackungsmulde zunächst durch Tiefziehen herzustellen, dann zu befüllen und mit einem Deckel zu versiegeln und anschließend in einem separaten Bearbeitungsschritt die Verpackungsmulde und den Deckel zusammen zum Ausbilden einer formschlüssigen Verbindung zwischen der Verpackungsmulde und dem Deckel umzuformen. Nach einem Öffnen der Verpackung durch ein Peelen der Siegelung zwischen der Verpackungsmulde und dem Deckel kann die Verpackung mittels der formschlüssigen Verbindung wieder verschlossen werden. Die formschlüssige Verbindung zwischen Verpackungsmulde und Deckel wird in dem separaten Bearbeitungsschritt durch Thermoformen erzeugt. Dies erfolgt durch gemeinsames Verformen der Verpackungsmulde und des Deckels mittels eines Prägemittels, welches zum Ausformen der Verbindung mit einem Gegenlager zusammenwirkt, das auf der dem Prägemittel gegenüberliegenden Seite der Verpackungsmulde und des Deckels vorliegt. Auch bei dieser Lösung ist das Vorsehen eines zusätzlichen Bearbeitungsschrittes sowie einer zusätzlichen Bearbeitungsstation erforderlich.

Die US 5,573,789 A beschreibt eine Vorrichtung zum Herstellen eines Blumentopfes mit nach außen gerichteten Rippen aus einem Materialbogen. Die Vorrichtung umfasst ein mehrteiliges Matrizenelement mit einer Vielzahl von separaten, kuchenstückförmigen Segmenten. Ein positives Formelement wird in das Matrizenelement geschoben und nimmt dabei den Materialbogen mit. Durch Verfahren von an dem positiven Formelement vorgesehenen Fingerelementen werden dann Bereiche des Materialbogens, welche später die Rippen an der Außenseite des Topfes bilden sollen, in Zwischenräume zwischen den beabstandeten Segmenten des Matrizenelements geschoben. Anschließend werden die Segmente des Matrizenelements auf eine zentrale Achse hin zusammengeschoben, um den Topf zu formen.

Die CA 1 135 020 A beschreibt ein Verfahren zum Zugformen eines Plastikbechers aus einem angewärmten Plastikbogen.

Weitere Verfahren und Formstationen werden in US6440354B1, JPS61105126U und US4338070A offenbart.

Es ist Aufgabe der Erfindung, einen Weg zum Herstellen von tiefgezogenen Verpackungsmulden komplexer Form, d.h. das Ausbilden von Wiederverschlusskerben, mit möglichst einfachen Mitteln auch bei größeren Folienstärken (beispielsweise dicker als 700 µm) anzugeben.

Diese Aufgabe wird durch das Verfahren gemäß Anspruch 1 beziehungsweise die Formstation gemäß Anspruch 7 gelöst. Die abhängigen Ansprüche geben vorteilhafte Ausführungsformen der Erfindung an.

Bei einem erfindungsgemäßen Verfahren zum Herstellen einer Verpackungsmulde durch Tiefziehen wird zumindest ein Bereich einer Folienbahn zwischen ein Formwerkzeugoberteil und ein Formwerkzeugunterteil einer Formstation verbracht. Ein Formstempel des Formwerkzeugoberteils wird entlang einer vertikalen Richtung in einen Formraum einer Matrize des Formwerkzeugunterteils eingeführt. Hierdurch wird durch Verformen der Folienbahn zwischen dem Formstempel und einer Innenwand des Formraums der Matrize in der Folienbahn eine Verpackungsmulde tiefgezogen. Die Innenwand des Formraums der Matrize kann je nach gewünschter Formgebung der Verpackungsmulde geeignet gewählt werden. Ein Anlegen der Folienbahn an die Innenwand des Formraums der Matrize kann durch das Anlegen eines Unterdrucks zwischen der Folienbahn und der Innenwand und/oder durch das Anlegen eines Überdrucks zwischen der Folienbahn und dem Formstempel begünstigt werden.

Um die Beschreibung der Erfindung zu vereinfachen, wird die Richtung des Einführens des Formstempels des Formwerkzeugoberteils in den Formraum der Matrize als "vertikale Richtung" bezeichnet. Vorzugsweise verläuft diese Richtung tatsächlich vertikal. Es versteht sich aber, dass die Erfindung nicht hierauf beschränkt sein soll. Die Richtung des Einführens des Formstempels in den Formraum der Matrize ist ersichtlicherweise von der Lage der Formstation im Raum abhängig. Bei entsprechendem Aufbau der Formstation kann die Richtung des

Einführens des Formstempels des Formwerkzeugoberteils in den Formraum der Matrize, also die "vertikale Richtung" im Sinne der Erfindung, prinzipiell beliebig im Raum orientiert sein.

Erfindungsgemäß wird im eingeführten Zustand des Formstempels, insbesondere im maximal eingeführten Zustand des Formstempels, ein Eindrücker unter einem Winkel zu der vertikalen Richtung in Richtung auf die Innenwand des Formraums hin aus dem Formstempel ausgefahren. Das Ausfahren des Eindrückers kann ein Anlegen der Folie an die Innenwand des Formraums unterstützen. So kann die Formqualität der hergestellten Verpackungsmulden auch bei komplizierter Formgebung verbessert werden. Insbesondere bei der Bearbeitung von dickeren Folien mit einer Stärke von beispielsweise mehr als 700 µm wirkt sich das Unterstützen des Anlegens der Folie an die Innenwand des Formraums durch den Eindrücker positiv auf das Formergebnis aus.

Durch den Eindrücker wird es ermöglicht, direkt beim Tiefziehen seitliche Auswölbungen in der Verpackungsmulde vorzusehen. Es ist also kein nachgelagerter, zusätzlicher Prozessschritt nach dem Tiefziehen mehr notwendig. Hierdurch lassen sich insbesondere auf besonders effiziente Art und Weise Verpackungsmulden mit Wiederverschlussvertiefungen oder Wiederverschlusskerben für einen reversiblen Eingriff mit einem Deckel herstellen.

Wie beschrieben, soll der Eindrücker unter einem Winkel zu der vertikalen Richtung aus dem Formstempel ausgefahren werden. Das heißt, dass die Richtung des Ausfahrens des Eindrückers nicht parallel zu der Richtung des Einführens des Formstempels in den Formraum der Matrize ist. Besonders vorteilhaft ist es, wenn zwischen der Richtung des Ausfahrens des Eindrückers und der vertikalen Richtung ein Winkel im Bereich von 30° bis 150° oder ein Winkel im Bereich von 45° bis 135°, oder ein Winkel im Bereich von 85° bis 95° vorliegt. Insbesondere kann der Eindrücker zumindest im Wesentlichen senkrecht zu der vertikalen Richtung aus dem Formstempel ausgefahren werden.

Vorzugsweise wird der Eindrücker, insbesondere von einem entsprechenden Aktuator, mittels Druckluft, mechanisch und/oder mittels Federkraft aus dem Formstempel ausgefahren. Ein Ausfahren mittels Druckluft ist besonders einfach realisierbar, wenn ohnehin eine Druckluftversorgung an der Formstation vorliegt, beispielsweise zum Erzeugen eines Überdrucks zwischen der Folie und dem Formstempel während des Tiefziehens. Ein mechanisches Ausfahren des Eindrückers lässt sich besonders exakt und definiert steuern, beispielsweise mittels eines Servomotors. Wird der Eindrücker mittels Federkraft ausgefahren, kann die Formstation besonders widerstandsfähig und robust ausgebildet werden.

Prinzipiell sind beliebige Formen für den Eindrücker denkbar. Vorzugsweise ist der Eindrücker aber keilförmig oder wulstförmig ausgebildet und damit zum Ausbilden von Vertiefungen oder Kerben zum wiederverschließbaren Aufnehmen eines Deckels zum Verschließen der Verpackungsmulde geeignet.

Es ist auch denkbar, dass mehrere Eindrücker vorgesehen sind, die jeweils synchron oder unabhängig voneinander in Richtung auf die Innenwand des Formraums hin aus dem Formstempel ausgefahren werden, insbesondere jeweils unter einem Winkel zu der vertikalen Richtung. So können an voneinander beabstandeten Stellen einzelne Wiederverschlussvertiefungen oder Wiederverschlusskerben in der Verpackungsmulde ausgebildet werden, um eine besonders sichere und dichte Wiederverschließbarkeit zu gewährleisten.

Vorzugsweise werden zumindest der Formstempel und/oder die Matrize beheizt, so dass die ggf. bereits vorgeheizte Folie während des Tiefziehens erwärmt wird und thermoplastisch verformbar wird oder bleibt. Da der Eindrücker während des Einführens des Formstempels in dem Formstempel aufgenommen ist, liegt eine Wärmeübertragung zwischen dem Formstempel und dem Eindrücker vor, so dass im Falle eines beheizten Formstempels der Eindrücker ebenfalls erwärmt wird. Hierdurch wird ein Umformen der Folie durch den Eindrücker vereinfacht. Es wäre aber auch denkbar, dass alternativ oder zusätzlich zu einer Beheizung des Formstempels und/oder der Matrize der Eindrücker separat beheizbar ist. So könnte die Temperatur des Eindrückers insbesondere separat eingestellt werden. Das Beheizen des Formstempels, der Matrize und/oder des Eindrückers kann mittels einer geeigneten Heizvorrichtung, insbesondere einer elektrischen Heizvorrichtung erfolgen.

Die Innenwand des Formraums umfasst eine Vertiefung, welche den Eindrücker beim Ausfahren zumindest teilweise aufnimmt. Die Vertiefung kann insbesondere formgemäß zu dem Eindrücker komplementär ausgebildet sein, um ein optimales Andrücken der Folie an die Innenwand durch den Eindrücker zu ermöglichen. Insbesondere kann die Vertiefung nutförmig oder kerbenförmig ausgebildet sein.

Es wäre denkbar, dass der Eindrücker vor dem Herausfahren des Formstempels aus dem Formraum der Matrize aktiv wieder teilweise oder vollständig eingefahren wird. Besonders vorteilhaft ist es aber, wenn bei einem Herausfahren des Formstempels aus dem Formraum der Matrize der Eindrücker durch Eingriff mit der Innenwand des Formraums, insbesondere mit der Vertiefung in der Innenwand, automatisch zumindest teilweise wieder eingefahren wird. Dies kann durch geeignete Formgebung des Eindrückers und der Innenwand ermöglicht werden.

Die Erfindung betrifft desweiteren eine Formstation zum Herstellen einer Verpackungsmulde durch Tiefziehen. Die Formstation ist zum Durchführen des erfindungsgemäßen Verfahrens geeignet, konfiguriert und ausgelegt. In Bezug auf das Verfahren beschriebene Merkmale lassen sich auf die Formstation übertragen und umgekehrt.

Eine erfindungsgemäße Formstation zum Herstellen einer Verpackungsmulde durch Tiefziehen umfasst ein Formwerkzeugoberteil mit einem Formstempel und ein Formwerkzeugunterteil mit einer Matrize. Der Formstempel des Formwerkzeugoberteils ist dazu konfiguriert, entlang einer vertikalen Richtung in einen Formraum der Matrize des Formwerkzeugunterteils eingeführt zu werden, um hierbei durch Verformen einer Folienbahn zwischen dem Formstempel und einer Innenwand des Formraums der Matrize in der Folienbahn eine Verpackungsmulde tiefzuziehen. Die Formstation umfasst desweiteren einen Eindrücker, der dazu konfiguriert ist, im eingeführten Zustand des Formstempels unter einem Winkel zu der vertikalen Richtung in Richtung auf die Innenwand des Formstempels hin aus dem Formstempel ausgefahren zu werden.

Weitere Merkmale der Formstation erschließen sich aus der obenstehenden Beschreibung des erfindungsgemäßen Verfahrens. Insbesondere kann die Formstation den beschriebenen Aktuator zum Ausfahren des Eindrückers mittels Druckluft, mechanisch und/oder mittels Federkraft umfassen. Alternativ oder zusätzlich kann die Formstation die beschriebene Heizvorrichtung zum Beheizen des Formstempels, der Matrize und/oder des Eindrückers umfassen.

Im Folgenden wird die Erfindung anhand eines Ausführungsbeispiels unter Bezugnahme auf die Figuren näher beschrieben. Dabei zeigt
- Figur 1: eine Ablaufsfolge des Tiefziehens einer Verpackungsmulde in einer schematischen Schnittansicht durch eine Formstation gemäß einer Ausführungsform; und
- Figur 2: eine schematische Perspektivansicht eines Formstempels einer Formstation gemäß einer Ausführungsform.

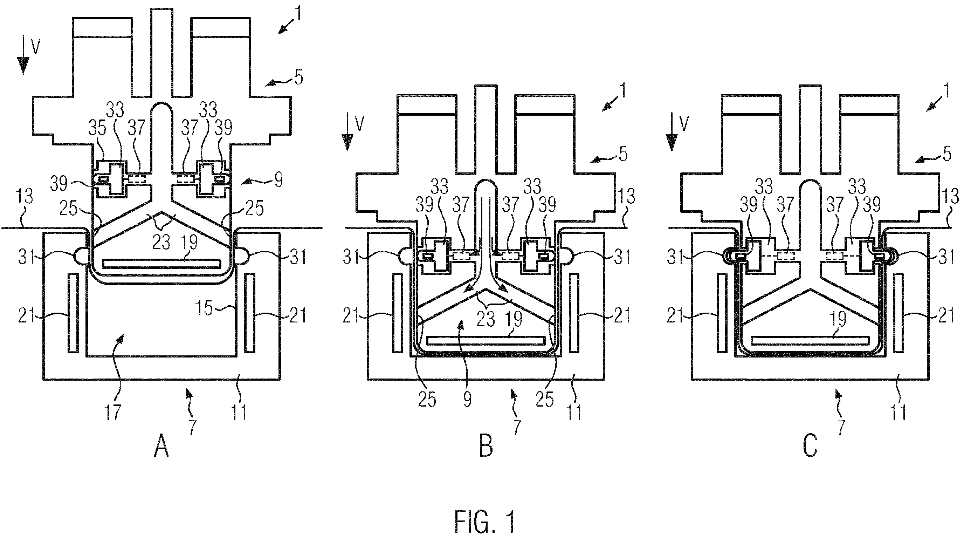

Wie in Figur 1 gezeigt, umfasst eine Formstation 1 zum Herstellen einer Verpackungsmulde 3 durch Tiefziehen gemäß einer Ausführungsform ein Formwerkzeugoberteil 5 und ein Formwerkzeugunterteil 7. Das Formwerkzeugoberteil 5 umfasst einen Formstempel 9 und das Formwerkzeugunterteil 7 eine Matrize 11. Der Formstempel 9 und die Matrize 11 wirken zusammen, um eine zumindest bereichsweise zwischen das Formwerkzeugoberteil 5 und das Formwerkzeugunterteil 7 verbrachte, insbesondere thermoplastisch verformbare Folienbahn 13 zu einer Verpackungsmulde 3 tiefzuziehen. Hierfür umfasst die Matrize 11 einen durch eine Innenwand 15 definierten Formraum 17. Je nach der gewünschten Form der Verpackungsmulde 3 wird der Formraum 17 der Matrize 11 geeignet ausgebildet. In der gezeigten Ausführungsform soll eine im Wesentlichen quaderförmige Verpackungsmulde 3 ausgebildet werden. Entsprechend ist der Formraum 17 der Matrize 11 im Wesentlichen quaderförmig ausgebildet.

Vor dem Zuführen der Folienbahn 13 in die Formstation 1 kann die Folienbahn 13 von einer oder von beiden Seiten, d.h. von oben und/oder von unten, durch Heizeinrichtungen in einer oder mehreren Vorheizstationen (nicht dargestellt) vorgeheizt werden.

Nachdem die Folienbahn 13 zumindest bereichsweise zwischen dem Formwerkzeugoberteil 5 und dem Formwerkzeugunterteil 7 positioniert und ggf. zwischen dem Formwerkzeugoberteil 5 und dem Formwerkzeugunterteil 7 geklemmt wurde, wird, wie in Teil A von Figur 1 gezeigt, der Formstempel 9 des Formwerkzeugoberteils 5 entlang einer vertikalen Richtung V in den Formraum 17 der Matrize 11 eingeführt. Hierdurch wird die Folienbahn 13 gewissermaßen in den Formraum 17 hinein tiefgezogen. Um ein Verformen der Folienbahn 13 zu vereinfachen, wird in der gezeigten Ausführungsform der Formstempel 9 mittels einer im Formstempel 9 vorgesehenen elektrischen Heizvorrichtung 19 beheizt. Alternativ oder zusätzlich wäre es auch denkbar, die Matrize 11 zu beheizen, beispielsweise durch eine in der Matrize 11 vorgesehene elektrische Heizvorrichtung 21. Durch das Beheizen des Formstempels 9 und/oder der Matrize 11 kann die Folienbahn 13 in einen leichter verformbaren Zustand gebracht werden.

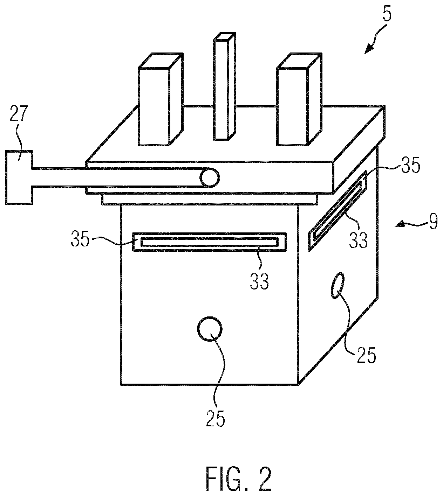

Vorzugsweise erfolgt das Formen der Verpackungsmulde 3 nicht alleine durch das Zusammenwirken zwischen dem Formstempel 9 und der Innenwand 15 des Formraums 17 der Matrize 11, sondern wird durch weitere Maßnahmen unterstützt. In der gezeigten Ausführungsform wird zwischen der Folienbahn 13 und dem Formstempel 9 ein Überdruck erzeugt, durch welchen die Folienbahn 13 in Richtung auf die Innenwand 15 des Formraums 17 hin beaufschlagt wird. Hierdurch wird erreicht, dass sich die Folienbahn 13 an die Innenwand 15 des Formraums 17 anlegt und so die gewünschte Form annimmt. In der gezeigten Ausführungsform sind zum Erzeugen des Überdrucks Druckluftkanäle 23 mit entsprechenden Druckluftauslässen 25 in dem Formstempel 9 vorgesehen. Wie in der schematischen Perspektivansicht des Formwerkzeugoberteils 5 aus Figur 2 ersichtlich, kann das Formwerkzeugoberteil 5 zur Versorgung der Druckluftkanäle 23 mit Druckluft an eine externe Druckluftquelle 27 angeschlossen sein. Alternativ wäre es beispielsweise denkbar, zwischen der Innenwand 15 des Formraums 17 der Matrize 11 und der Folienbahn 13 einen Unterdruck anzulegen. Hierzu könnten Absaugöffnungen in der Innenwand 15 des Formraums 17 vorgesehen sein.

In der gezeigten Ausführungsform soll eine Verpackungsmulde 3 geformt werden, welche Wiederverschlusskerben 29 aufweist. Diese Wiederverschlusskerben 29 sollen zur späteren wiederverschließbaren Aufnahme eines Deckels für die Verpackungsmulde 3 ausgelegt sein. Entsprechend definiert die Innenwand 15 des Formraums 17 der Matrize 11 Vertiefungen 31, welche die Form der Wiederverschlusskerben 29 angeben. Wie in Teil B von Figur 1 dargestellt, kann es insbesondere bei der Verwendung von Folienbahnen 13 größerer Dicken (beispielsweise größer als 1000 µm) vorkommen, dass der zwischen der Folienbahn 13 und dem Formstempel 9 aufgebrachte Überdruck nicht ausreicht, um die Folienbahn 19 im Bereich der Vertiefungen 31 vollständig an die Innenwand 15 des Formraums 17 der Matrize 11 anzulegen.

Um das Anlegen der Folienbahn 13 an die Innenwand 15 des Formraums 17 im Bereich der Vertiefungen 31 zu unterstützen, sind gemäß der gezeigten Ausführungsform Eindrücker 33 vorgesehen, welche im eingeführten Zustand des Formstempels 9 unter einem Winkel zu der vertikalen Richtung V in Richtung auf die Innenwand 15 des Formraums 17 hin aus dem Formstempel 9 ausgefahren werden. Die Eindrücker 33 sind in dem Stempel 9 an Positionen vorgesehen, die den Vertiefungen 31 der Innenwand 15 des Formraums 17 entsprechen, so dass die Eindrücker 33 in ihren ausgefahrenen Stellungen zumindest teilweise in den Vertiefungen 31 aufgenommen werden, wie dies in Teil C von Figur 1 dargestellt ist. Beim Ausfahrern der Eindrücker 33 wird die Folienbahn 13 gewissermaßen in die Vertiefungen 31 hineingedrückt. Hierdurch wird ein Anlegen der Folienbahn 13 an die Innenwand 15 des Formraums 17 im Bereich der Vertiefungen 31, und damit das Ausbilden der Wiederverschlusskerben 29, begünstigt. Für das Ausbilden von Wiederverschlusskerben 29 ist es besonders vorteilhaft, wenn der Eindrücker 33 keilförmig oder wulstförmig ausgebildet ist. Es wären aber auch andere Formen für den Eindrücker 33 denkbar.

In der gezeigten Ausführungsform werden die Eindrücker 33 mittels Druckluft ausgefahren. Hierzu sind die Eindrücker 33 aufnehmende Kammern 35 des Formstempels 9 mit den im Formstempel 9 vorgesehenen Druckluftkanälen 23 verbunden. Wenn im vollständig eingeführten Zustand des Formstempels 9 (Teil B von Figur 1) die Druckluftzufuhr mittels der Druckluftquelle 27 aktiviert wird, werden auch die Kammern 35 mit Druckluft versorgt, wodurch die Eindrücker 33 in den Kammern 35 nach außen geschoben werden, also ausgefahren werden. Dies ist besonders vorteilhaft, da die ohnehin vorhandene Druckluftquelle 27 auch als Aktuator zum Ausfahren der Eindrücker 33 wirkt. Alternativ oder zusätzlich wäre es aber auch denkbar, separate Aktuatoren 37 zum Ausfahren der Eindrücker 33 vorzusehen. Solche sind in Figur 1 gestrichelt dargestellt. Die Aktuatoren 37 könnten beispielsweise dazu konfiguriert sein, die Eindrücker 33 mittels Federkraft oder mechanisch auszufahren. Bei den Aktuatoren 37 könnte es sich beispielsweise um Federeinrichtungen oder Schrittmotoren handeln.

In der gezeigten Ausführungsform werden die Eindrücker 33 im Wesentlichen senkrecht zu der vertikalen Richtung V aus dem Formstempel 9 ausgefahren. Je nach Lage und Form der Eindrücker 33 und der Vertiefungen 31 in der Innenwand 15 des Formraums 17 können die Eindrücker 33 aber auch unter einem anderen Winkel zu der vertikalen Richtung V ausgefahren werden. Besonders vorteilhaft ist es, wenn zwischen der Richtung des Ausfahrens des Eindrückers 33 und der vertikalen Richtung V ein Winkel im Bereich von 30° bis 150° oder ein Winkel im Bereich von 45° bis 135°, oder ein Winkel im Bereich von 85° bis 95° vorliegt.

Um den Formstempel 9 nach dem Tiefziehen entgegen der vertikalen Richtung V wieder aus dem Formraum 17 der Matrize 11 herausfahren zu können, können die Eindrücker 33 mittels des Aktuators 37 wieder aktiv eingefahren werden. Es wäre aber auch denkbar, dass die Eindrücker 33 beim Herausfahren des Formstempels 9 aus dem Formraum 17 der Matrize 11 durch Eingriff mit der Innenwand 15 des Formraums 17 im Bereich der Vertiefungen 31 automatisch wieder eingefahren werden. Dies kann insbesondere durch eine geeignete Wahl der Form der Vertiefungen 31 sowie der Eindrücker 33 vereinfacht werden. Insbesondere sind keilförmig ausgebildete Eindrücker 33 vorteilhaft.

Da die Eindrücker 33 in dem Formstempel 9 vorgesehen sind, werden sie beim Beheizen des Formstempels 9 automatisch mit erwärmt, wodurch ein Verformen der Folienbahn 13 durch die Eindrücker 33 vereinfacht wird. Es wäre aber auch denkbar, die Eindrücker 33 mit separaten Heizvorrichtungen 39 zu versehen, welche insbesondere als elektrische Heizvorrichtungen ausgebildet sein können.

Die dargestellte Formstation 1 umfasst eine Mehrzahl von Eindrückern 33 und entsprechenden Vertiefungen 31 in der Innenwand 15 des Formraums 17 der Matrize 11. Es versteht sich, dass die Erfindung auch Ausführungsformen mit lediglich einem Eindrücker 33 und/oder einer Vertiefung 31 einschließt.

## Patentansprüche

1. Verfahren zum Herstellen einer Verpackungsmulde (3) durch Tiefziehen, umfassend:
Verbringen zumindest eines Bereichs einer Folienbahn (13) zwischen ein Formwerkzeugoberteil (5) und ein Formwerkzeugunterteil (7) einer Formstation (1);
Einführen eines Formstempels (9) des Formwerkzeugoberteils (5) entlang einer vertikalen Richtung (V) in einen Formraum (17) einer Matrize (11) des Formwerkzeugunterteils (7), wobei hierbei durch Verformen der Folienbahn (13) zwischen dem Formstempel (9) und einer Innenwand (15) des Formraums (17) der Matrize (11) in der Folienbahn (13) eine Verpackungsmulde (3) tiefgezogen wird,
**dadurch gekennzeichnet, dass**
im eingeführten Zustand des Formstempels (9) ein Eindrücker (33) unter einem Winkel zu der vertikalen Richtung (V) in Richtung auf die Innenwand (15) des Formraums (17) hin aus dem Formstempel (9) ausgefahren wird, wobei der Eindrücker (33) beim Ausfahren zumindest teilweise in eine Vertiefung (31) in der Innenwand (15) des Formraums (17) hinein ausgefahren wird.

2. Verfahren nach Anspruch 1, wobei der Eindrücker (33) mittels Druckluft, mechanisch und/oder mittels Federkraft ausgefahren wird.

3. Verfahren nach einem der vorangehenden Ansprüche, wobei der Eindrücker (33) keilförmig oder wulstförmig ausgebildet ist.

4. Verfahren nach einem der vorangehenden Ansprüche, wobei mehrere Eindrücker (33) vorgesehen sind, welche jeweils in Richtung auf die Innenwand (15) des Formraums (17) hin aus dem Formstempel (9) ausgefahren werden.

5. Verfahren nach einem der vorangehenden Ansprüche, wobei der Formstempel (9), die Matrize (11) und/oder der Eindrücker (33) beheizt werden.

6. Verfahren nach einem der vorangehenden Ansprüche, wobei bei einem Herausfahren des Formstempels (9) aus dem Formraum (17) der Matrize (11) der Eindrücker (33) durch Eingriff mit der Innenwand (15) des Formraums (17), insbesondere mit der Vertiefung (31) in der Innenwand (15), automatisch zumindest teilweise wieder eingefahren wird.

7. Formstation (1) zum Herstellen einer Verpackungsmulde (3) durch Tiefziehen, umfassend
ein Formwerkzeugoberteil (5) mit einem Formstempel (9); und
ein Formwerkzeugunterteil (7) mit einer Matrize (11), wobei
der Formstempel (9) des Formwerkzeugoberteils (5) dazu konfiguriert ist, entlang einer vertikalen Richtung (V) in einen Formraum (17) der Matrize (11) des Formwerkzeugunterteils (7) eingeführt zu werden, um hierbei durch Verformen einer Folienbahn (13) zwischen dem Formstempel (9) und einer Innenwand (15) des Formraums (17) der Matrize (11) in der Folienbahn (13) eine Verpackungsmulde (3) tiefzuziehen,
**gekennzeichnet durch**
einen Eindrücker (33), der dazu konfiguriert ist, im eingeführten Zustand des Formstempels (9) unter einem Winkel zu der vertikalen Richtung (V) in Richtung auf die Innenwand (15) des Formraums (17) hin aus dem Formstempel (9) ausgefahren zu werden, wobei die Innenwand (15) des Formraums (17) eine Vertiefung (31) umfasst, welche dazu konfiguriert ist, den Eindrücker (33) in seinem ausgefahrenen Zustand zumindest teilweise aufzunehmen.

8. Formstation nach Anspruch 7, welche zudem einen Aktuator (27, 37) umfasst, welcher dazu konfiguriert ist, den Eindrücker (33) mittels Druckluft, mechanisch und/oder mittels Federkraft auszufahren.

9. Formstation nach Anspruch 7 oder 8, wobei der Eindrücker (33) keilförmig oder wulstförmig ausgebildet ist.

10. Formstation nach einem der Ansprüche 7 bis 9, wobei mehrere Eindrücker (33) vorgesehen sind, welche jeweils dazu konfiguriert sind, in Richtung auf die Innenwand (15) des Formraums (17) hin aus dem Formstempel (9) ausgefahren werden.

11. Formstation nach einem der Ansprüche 7 bis 10, welche zudem eine Heizvorrichtung (19, 21, 39) zum Beheizen des Formstempels (9), der Matrize (11) und/oder des Eindrückers (33) umfasst.

12. Formstation nach einem der Ansprüche 7 bis 11, wobei der Eindrücker (33) dazu konfiguriert ist, bei einem Herausfahren des Formstempels (9) aus dem Formraum (17) der Matrize (11) nach dem Tiefziehen durch Eingriff mit der Innenwand (15) des Formraums (17), insbesondere mit der Vertiefung (31) in der Innenwand (15), automatisch zumindest teilweise wieder eingefahren zu werden.

## Claims

1. A method for producing a packaging trough (3) by thermoforming, comprising:
positioning at least an area of a film web (13) between a forming tool upper part (5) and a forming tool lower part (7) of a forming station (1);
inserting a male die part (9) of the forming tool upper part (5) along a vertical direction (V) into a forming space (17) of a female die part (11) of the forming tool lower part (7), a packaging trough (3) being thus produced through thermoforming in the film web (13) by deforming the film web (13) between the male die part (9) and an inner wall (15) of the forming space (17) of the female die part (11),
**characterized in that**
in the inserted condition of the male die part (9), a push-in unit (33) is extended from the male die part (9) towards the inner wall (15) of the forming space (17) at an angle relative to the vertical direction (V), wherein, when being extended, the push-in unit (33) is extended, at least partially, into a recess (31) provided in the inner wall (15) of the forming space (17).

2. The method according to claim 1, wherein the push-in unit (33) is extended by means of compressed air, mechanically and/or by means of spring force.

3. The method according to one of the preceding claims, wherein the push-in unit (33) has the shape of a wedge or of a bead.

4. The method according to one of the preceding claims, wherein a plurality of push-in units (33) is provided, each of these push-in units (33) being extended from the male die part (9) in the direction of the inner wall (15) of the forming space (17).

5. The method according to one of the preceding claims, wherein the male die part (9), the female die part (11) and/or the push-in unit (33) are heated.

6. The method according to one of the preceding claims, wherein, when the male die part (9) is moved out of the forming space (17) of the female die part (11), the push-in unit (33) is automatically retracted, at least partially, through engagement with the inner wall (15) of the forming space (17), in particular with the recess (31) provided in the inner wall (15).

7. A forming station (1) for producing a packaging trough (3) by thermoforming, comprising
a forming tool upper part (5) with a male die part (9); and
a forming tool lower part (7) with a female die part (11), wherein
the male die part (9) of the forming tool upper part (5) is configured for insertion into a forming space (17) of the female die part (11) of the forming tool lower part (7) along a vertical direction (V) so as to produce by thermoforming a packaging trough (3) in a film web (13) by deforming the film web (13) between the male die part (9) and the inner wall (15) of the forming space (17) of the female die part (11),
**characterized by**
a push-in unit (33) which is configured to be extended in the inserted condition of the male die part (9) from the male die part (9) towards the inner wall (15) of the forming space (17) at an angle relative to the vertical direction (V), wherein the inner wall (15) of the forming space (17) comprises a recess (31), which is configured for at least partially receiving therein the push-in unit (33) in its extended condition.

8. The forming station according to claim 7, which additionally comprises an actuator (27, 37) that is configured to extend the push-in unit (33) by means of compressed air, mechanically and/or by means of spring force.

9. The forming station according to claim 7 or 8, wherein the push-in unit (33) has the shape of a wedge or of a bead.

10. The forming station according to one of the claims 7 to 9, wherein a plurality of push-in units (33) is provided, each of these push-in units (33) being configured to be extended from the male die part (9) in the direction of the inner wall (15) of the forming space (17).

11. The forming station according to one of the claims 7 to 10, which additionally comprises a heating device (19, 21, 39) for heating the male die part (9), the female die part (11) and/or the push-in unit (33).

12. The forming station according to one of the claims 7 to 11, wherein the push-in unit (33) is configured to be automatically retracted, at least partially, through engagement with the inner wall (15) of the forming space (17), in particular with the recess (31) provided in the inner wall (15), when the male die part (9) is moving out of the forming space (17) of the female die part (11) after thermoforming.

## Revendications

1. Procédé de fabrication d'une barquette d'emballage (3) par emboutissage, comprenant les opérations suivantes:
Placer au moins une partie d'une bande de film (13) entre un haut de matrice de formage (5) et un bas de matrice de formage (7) d'une station de formage (1);
Introduire un poinçon de formage (9) de la partie supérieure (5) de la matrice de formage le long d'une direction verticale (V) dans un espace de formage (17) d'une matrice (11) de la partie inférieure (7) de la matrice de formage, une auge d'emballage (3) étant emboutie dans la bande de film (13) par déformation de la bande de film (13) entre le poinçon de formage (9) et une paroi intérieure (15) de l'espace de formage (17) de la matrice (11),
**caractérisé en ce que**
lorsqu'est introduit le poinçon de formage (9), un pénétrateur (33) est déployé à partir du poinçon de formage (9) sous un angle par rapport à la direction verticale (V) en direction de la paroi intérieure (15) de l'espace de formage (17), le pénétrateur (33) étant prolongé au moins partiellement dans un évidement (31) de la paroi intérieure (15) de l'espace de formage (17) pendant l'extension.

2. Procédé selon la revendication 1, dans lequel le pénétrateur (33) est déployé au moyen d'air comprimé, mécaniquement et/ou par la force d'un ressort.

3. Procédé selon l'une des revendications précédentes, dans lequel le pénétrateur (33) est en forme de coin ou de perle.

4. Procédé selon l'une quelconque des revendications précédentes, dans lequel une pluralité d'indentations (33) sont prévues, chacune d'entre elles étant prolongée à partir du piston de formage (9) dans une direction vers la paroi intérieure (15) de l'espace de formage (17).

5. Procédé selon l'une des revendications précédentes, dans lequel le poinçon de formage (9), la matrice (11) et/ou le pénétrateur (33) sont chauffés.

6. Procédé selon l'une quelconque des revendications précédentes, dans lequel, lorsque le poinçon de formage (9) est déplacé hors de l'espace de formage (17) de la matrice (11), l'abaisseur (33) est déplacé hors de l'espace de formage (17) de la matrice (11) par engagement avec la paroi intérieure (15) de la cavité du moule (17), en particulier avec l'évidement (31) dans la paroi intérieure (15), est automatiquement au moins partiellement rétracté.

7. Poste de formage (1) pour la production d'une barquette d'emballage (3) par emboutissage, comprenant:
une partie supérieure de matrice de formage (5) avec un poinçon de formage (9); et
une partie inférieure de moule (7) avec une matrice (11), dans laquelle
le poinçon de formage (9) de la partie supérieure (5) de la matrice de formage est configuré pour être inséré le long d'une direction verticale (V) dans un espace de formage (17) de la matrice (11) de la partie inférieure (7) de la matrice de formage afin d'emboutir ainsi une auge d'emballage (3) en déformant une bande de film (13) entre le poinçon de formage (9) et une paroi intérieure (15) de l'espace de formage (17) de la matrice (11) dans la bande de film (13),
**caractérisé par**
un pénétrateur (33) configuré pour être étendu depuis le poinçon de formage (9) selon un angle par rapport à la direction verticale (V) vers la paroi intérieure (15) de l'espace de formage (17) lorsque le poinçon de formage (9) est dans son état inséré, dans lequel la paroi intérieure (15) de l'espace de formage (17) comprend un évidement (31) configuré pour recevoir au moins partiellement le pénétrateur (33) dans son état étendu.

8. Poste de moulage selon la revendication 7, comprenant en outre un actionneur (27, 37) configuré pour étendre le pénétrateur (33) au moyen d'air comprimé, mécaniquement et/ou au moyen de la force d'un ressort.

9. Poste de moulage selon les revendications 7 ou 8, dans lequel le pénétrateur (33) est en forme de coin ou de bourrelet.

10. Poste de formage selon l'une quelconque des revendications 7 à 9, dans lequel une pluralité de pénétrateurs (33) sont prévus, chacun étant configuré pour être étendu du piston de formage (9) vers la paroi intérieure (15) de l'espace de formage (17).

11. Poste de formage selon l'une des revendications 7 à 10, comprenant en outre un dispositif de chauffage (19, 21, 39) pour chauffer le poinçon de formage (9), la matrice (11) et/ou le pénétrateur (33).

12. Poste de moulage selon l'une quelconque des revendications 7 à 11, dans lequel l'abaisseur (33) est configuré pour être automatiquement rétracté au moins partiellement lorsque le poinçon de moulage (9) est déplacé hors de l'espace de moulage (17) de la matrice (11) après emboutissage profond par engagement avec la paroi intérieure (15) de l'espace de moulage (17), en particulier avec l'évidement (31) de la paroi intérieure (15).
